# EUROPEAN PATENT SPECIFICATION

(11) **EP 3 949 508 B1**
(45) Date of publication and mention of the grant of the patent: **18.10.2023**
(21) Application number: 20716586.1
(22) Date of filing: 28.03.2020
(51) Int. Cl.: H04W 36/00, H04W 36/36, H04W 36/30

(54) **FEEDBACK INFORMATION FOR CONDITIONAL MOBILITY**
RÜCKKOPPLUNGSINFORMATION FÜR BEDINGTE MOBILITÄT
INFORMATIONS DE RÉTROACTION POUR MOBILITÉ CONDITIONNELLE

(30) Priority: 28.03.2019 US 201962825385 P
(43) Date of publication of application: 09.02.2022
(73) Proprietor: Telefonaktiebolaget LM Ericsson (publ), 164 83 Stockholm (SE)
(72) Inventor: RUNE, Johan, 181 29 Lidingö (SE); DA SILVA, Icaro L. J., 170 77 Solna (SE)
(74) Representative: Zacco Sweden AB
(86) International application number: PCT/IB2020/052979
(87) International publication number: WO 2020/194276

(56) References cited:
- WO-A1-2018/156696
- ASTRI ET AL: "Discussion on Conditional Handover in NR", 3GPP DRAFT; R2-1802008 - DISCUSSION ON CONDITIONAL HANDOVER IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Athens, Greece; 20180226 - 20180302 12 February 2018 (2018-02-12), XP051398939, Retrieved from the Internet: URL:http://www.3gpp.org/ftp/tsg%5Fran/WG2% 5FRL2/TSGR2%5F101/Docs/ [retrieved on 2018-02-12]
- MEDIATEK INC: "Performance Evaluation and Implication for Conditional HO", 3GPP DRAFT; R2-1816960 DISC PERFORMANCE EVALUATION AND IMPLICATION FOR CONDITIONAL HO, 3RD GENERATION PARTNERSHIP PROJECT (3GPP), MOBILE COMPETENCE CENTRE ; 650, ROUTE DES LUCIOLES ; F-06921 SOPHIA-AN , vol. RAN WG2, no. Spokane, WA, USA; 20181112 - 20181116 12 November 2018 (2018-11-12), XP051556522, Retrieved from the Internet: URL:http://www.3gpp.org/ftp/Meetings%5F3GP P%5FSYNC/RAN2/Docs/R2%2D1816960%2Ezip [retrieved on 2018-11-12]
- ERICSSON: "Further details of conditional handover in LTE", 3GPP DRAFT; R2-1901082 FURTHER DETAILS OF CONDITIONAL HANDOVER IN LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Athens, Greece; 20190225 - 20190301 15 February 2019 (2019-02-15), XP051602447, Retrieved from the Internet: URL:http://www.3gpp.org/ftp/tsg%5Fran/WG2% 5FRL2/TSGR2%5F105/Docs/R2%2D1901082%2Ezip [retrieved on 2019-02-15]
- MEDIATEK INC: "Discussions on Conditional Handover Procedures", 3GPP DRAFT; R2-1900143 DISCUSSIONS ON CONDITIONAL HANDOVER PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Athens, Greece; 20190225 - 20190301 15 February 2019 (2019-02-15), XP051601543, Retrieved from the Internet: URL:http://www.3gpp.org/ftp/tsg%5Fran/WG2% 5FRL2/TSGR2%5F105/Docs/R2%2D1900143%2Ezip [retrieved on 2019-02-15]

## Description

### TECHNICAL FIELD

The present disclosure relates generally to wireless communications systems and, more particularly, to wireless communications and related operations for conditional handover.

### BACKGROUND

A user equipment (UE) in RRC_CONNECTED mode in an Long Term Evolution (LTE, also called E-UTRA) or New Radio (NR) network can be configured by the network to perform measurements of network signals. Upon triggering measurement reports, the network may send a handover command to the UE. In an LTE network, this is done by sending the UE an *RRConnectionReconfiguration* message with a *mobilityControlInfo* information element (IE), and in NR by sending an *RRCReconfiguration* message with a *reconfigurationWithSync* IE.

These reconfiguration messages are prepared by the target cell upon a request from the source node and take into account the existing RRC configuration the UE has with the source cell, which is provided in the inter-node request. The reconfiguration message provided by target contains information the UE needs to access the target cell, such as a random access configuration, a new C-RNTI assigned by the target cell, and security parameters enabling the UE to calculate new security keys associated with the target cell so the UE can send an encrypted and integrity protected handover complete message on SRB1 based on new security keys upon accessing the target cell.

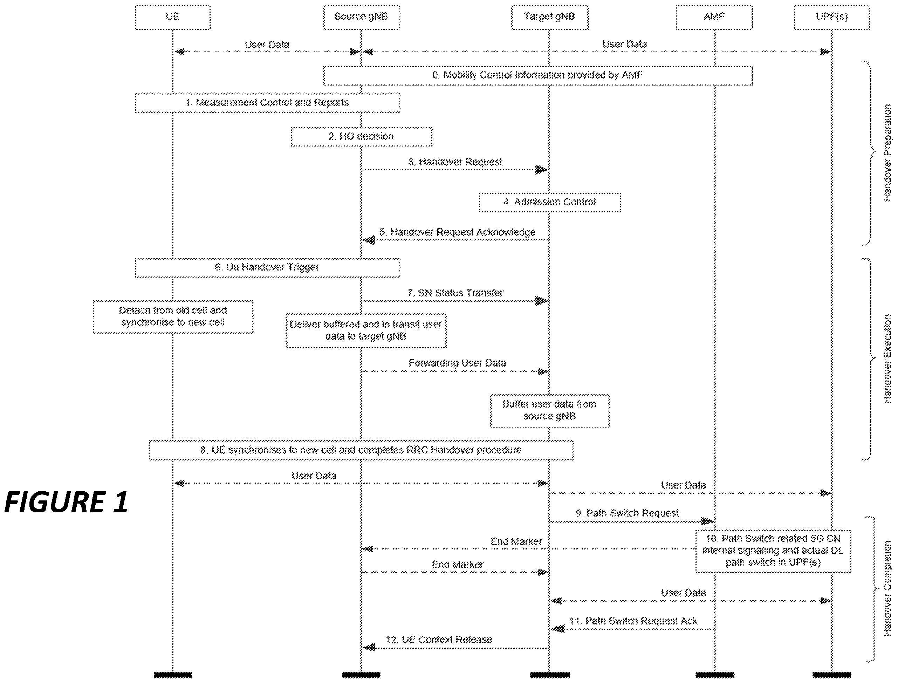

**Figure 1** illustrates operations and signaling flow between the UE, the source node and the target node during a handover procedure. Referring to **Figure 1**, in both LTE and NR, some principles exist for handovers.

One principle is that mobility in RRC_CONNECTED mode is network-based, as the network has the best information regarding current network conditions, such as load conditions, resources in different nodes, available frequencies, etc. The network can also consider the situation of many UEs in the network from a resource allocation perspective.

Another principle is that the network prepares a target cell before the UE accesses that cell. The source node provides the UE with the RRC configuration to be used in the target cell, including the SRB1 configuration used to send a handover (HO) complete message. The RRC configuration is prepared by the target node and is forwarded to the UE by the source node. This message from the source node is referred to as an *RRCReconfiguration* message with a *reconfigurationWithSync* IE in NR and an *RRCConnectionReconfiguration* message with a *mobilityControlInfo* IE in LTE. However, when prepared by the target node, this message is referred to as the HandoverCommand. For that reason, it is often referred to as "Handover Command" (or "HO Command") in both NR and LTE.

Another principle is that the target node provides the UE with a C-RNTI associated with the target cell, to be used when the UE accesses the target cell. That is, the target node identifies the UE from a Msg3 (i.e. the third message in the random access procedure) at the MAC level for the HO complete message. Hence, there is no context fetching, unless a failure occurs.

To speed up the handover, the network may provide the UE with information on how to access the target cell, such as the random access channel (RACH) configuration, so that the UE does not have to acquire system information (SI) in the target cell before the handover is executed and the UE accesses the network in the target cell.

The UE may be provided with contention-free random access (CFRA) resources in the target cell, such as a dedicated random access preamble. In that case, the target node identifies the UE from the random access preamble (Msg1). The principle is that the procedure can always be optimized with dedicated resources. In conditional handover (CHO), that might be difficult as there is uncertainty about the identity of the final target cell (i.e. which of the potentially multiple potential target cells the UE will eventually connect in). There is also uncertainty about the timing of the handover, i.e. the delay from the time when the UE is provided with the CHO configuration until the actual execution of the handover. It is not even certain that the handover will be executed, since it is possible that no CHO trigger condition is ever fulfilled.

A security configuration is prepared before the UE accesses the target cell. For example, security keys must be refreshed before sending the *RRCReconfigurationComplete* message (in NR) or the *RRCConnectionReconfigurationComplete* message (in LTE), encrypted and integrity protected with the new keys, so that the UE can be verified in target cell.

Both full and delta reconfiguration are supported in the HO Command so that the size of the HO Command can be reduced. Delta configuration refers to the method of only providing the UE with the parts of the target cell configuration data that are different from the corresponding source cell configuration data.

Two new work items for mobility enhancements in LTE and NR have started in 3GPP in release 16. The main objectives of the work items are to improve the robustness at handover and to decrease the interruption time at handover.

One problem related to robustness at handover is that the HO Command is normally sent when the radio conditions for the UE are already quite bad. In that case, the HO Command may not reach the UE in time if the message is segmented or there are retransmissions.

In LTE and NR, different solutions to increase mobility robustness have been discussed. One solution discussed in both LTE and NR is referred to as "conditional handover" or "early handover command". To avoid the undesired dependence on the serving radio link (and radio conditions) at the time when the UE should execute the handover, the network can provide early RRC signaling to the UE in the form of a Conditional Handover Command. For example, based on radio conditions, a handover execution may be triggered when the signal strength from a given neighbor cell becomes better than the source cell by a predetermined amount. As soon as the condition is fulfilled, the UE executes the handover in accordance with the provided Conditional Handover Command.

The handover condition could, for example, be that the quality of the potential target cell or beam becomes X dB stronger than the serving cell. The threshold used in a preceding measurement reporting event should then be chosen lower than the one in the handover execution condition, so that handover is triggered earlier when the link quality in the serving cell is still acceptable. This allows the serving node (gNB or eNB) to prepare the conditional handover upon reception of an early measurement report and to provide the *RRCConnectionReconfiguration* with *mobilityControlInfo* IE (LTE) command or *RRCReconfiguration* with a *reconfigurationWithSync* IE (NR) command at a time when the radio link between the source cell and the UE is still stable. The execution of the handover is done at a later point in time, and is triggered by another threshold, which is considered optimal for the handover execution.

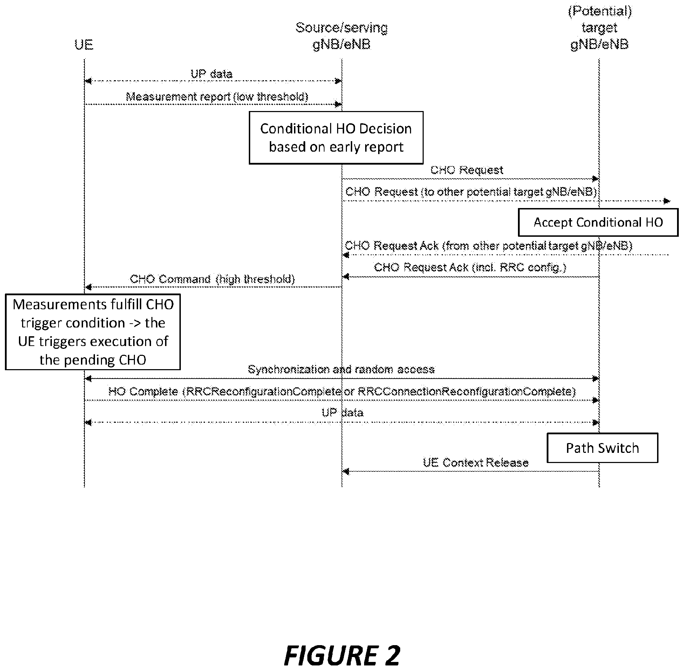

**Figure 2** illustrates operations and signaling flow between the UE, the source node and the target node during a conditional handover procedure. The CHO Command may, for example, come in the form of a *ConditionalRRCReconfiguration* or *ConditionalRRCConnectionReconfiguration.*

**Figure 2** depicts an example with one or more potential target cell(s). In practice there may often be multiple cells or beams that the UE reported as possible candidates based on its preceding radio resource management (RRM) measurements.

The network has the freedom to issue Conditional Handover Commands for one or more of those candidates. The *RRCConnectionReconfiguration* or *RRCReconfiguration* for each of those candidates may differ, for example, in terms of the HO execution condition as well as in terms of the random access (RA) preamble to be sent when a condition is met.

While the UE evaluates the handover execution condition, it continues operating in accordance with its current RRC configuration. When the UE determines that the handover condition is fulfilled, it disconnects from the serving cell, applies the Conditional HO Command and its included RRC configuration and connects to the target cell. These steps are equivalent to the current, instantaneous handover execution.

In NR and LTE, two inter-node RRC messages are typically used: *HandoverPreparationInformation* and *HandoverCommand.* When the source node decides to hand over the UE, the source node provides the target node with some information in the *HandoverPreparationInformation* message that enables the target node to prepare a *HandoverCommand* message, including an *RRCReconfiguration* message with the RRC configuration to be used in the target cell upon handover execution. When transferred from the source node to the target node, the *HandoverPreparationInformation* message is encapsulated in a Handover Request message. When the *HandoverCommand* message is transferred from the target node to the source node, it is encapsulated in a Handover Request Acknowledge message.

According to 3GPP TS 38.420, there is a function called "Handover preparation function" that allows the exchange of information between source and target NG-RAN nodes in order to initiate the handover of a certain UE to the target.

It is also possible to cancel a prepared handover using the "Handover canceling function" that allows informing an already prepared target NG-RAN node that a prepared handover will not take place. It allows releasing the resources allocated during a preparation.

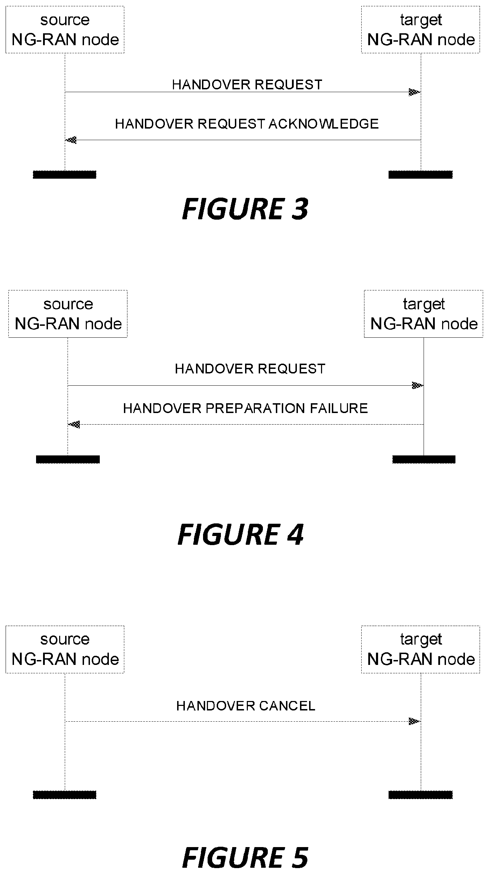

**Figure 3** illustrates operations and data flow for handover preparation with a successful operation. The source NG-RAN node initiates the procedure by sending a HANDOVER REQUEST message to the target NG-RAN node. When the source NG-RAN node sends the HANDOVER REQUEST message, it shall start the timer TXnRELOCprep.

At reception of the HANDOVER REQUEST message the target NG-RAN node shall prepare the configuration of the AS security relation between the UE and the target NG-RAN node by using the information in the UE Security Capabilities IE and the AS Security Information IE in the UE Context Information IE.

**Figure 4** illustrates operations and data flow for handover preparation with an unsuccessful operation. If the target NG-RAN node does not admit at least one PDU session resource, or a failure occurs during the Handover Preparation, the target NG-RAN node sends a HANDOVER PREPARATION FAILURE message to the source NG-RAN node.

**Figure 5** illustrates operations and data flow for handover cancel with a successful operation. The source NG-RAN node initiates the procedure by sending a HANDOVER CANCEL message to the target NG-RAN node. The source NG-RAN node indicates the reason for cancelling the handover by means of an appropriate cause value.

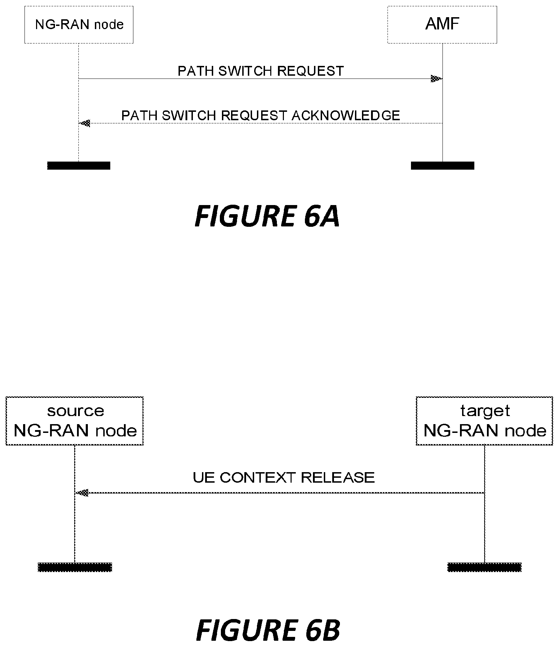

**Figure 6A** illustrates operations and data flow for a Path Switch Request with a successful operation. The purpose of the Path Switch Request procedure is to request the switch of a downlink general packet radio service (GPRS) tunneling protocol (GTP) tunnel towards a new GTP tunnel endpoint.

The NG-RAN node initiates the procedure by sending a PATH SWITCH REQUEST message to the AMF.

After all necessary updates including the UP path switch have been successfully completed in the 5GC for at least one of the PDU session resources included in the PATH SWITCH REQUEST, the AMF sends the PATH SWITCH REQUEST ACKNOWLEDGE message to the NG-RAN node and the procedure ends.

**Figure 6B** illustrates operations and data flow for a UE context release with successful operation for handover. The UE Context Release procedure is initiated by the target NG-RAN node. By sending a UE CONTEXT RELEASE message the target NG-RAN node informs the source NG-RAN node of Handover success and triggers the release of resources.

An ASTRI and TCL Communication Ltd 3GPP submission entitled "Discussion on Conditional Handover in NR" (R2-1802008, Athens, Greece, 26th Feb - 2nd March 2018) discloses a discussion on conditional handover procedures, and in particular discusses the awareness of the conditional handover. A MediaTek Inc 3GPP submission entitled "Performance Evaluation and Implication for Conditional HO" (R2-1816960, Spokane, USA, Nov 2018) provides a justification for conditional handover by evaluating mobility performance. An Ericsson 3GPP submission entitled "Further details of conditional handover in LTE" (R2-1901082, Athens, Greece, 25 Feb - 1 March, 2019) discloses a discussion on the configuration of conditional handover. A MediaTek Inc 3GPP submission entitled "Discussions on Conditional Handover Procedures" (R2-1900143, Athens, Greece, 25th Feb - 1st March 2019) discusses CHO procedures, including the information carried in the conditional HO command. WO 2018/156696 A1 discloses a method for exiting conditional handovers and for estimating a user equipment mobility state.

### SUMMARY

The invention is set out by the appended set of claims, providing a method performed by wireless device according to claim 1 and a corresponding wireless device according to claim 8 as well as a method performed by a network node according to claim 9 and a corresponding network node according to claim 15. A method by a wireless device for handling a conditional mobility procedure according to some embodiments includes determining information from measurements relating to a trigger condition that triggers the conditional mobility procedure to be performed by the wireless device, and transmitting the information to a network node. The information relates to one or more non-triggered potential target cells and is transmitted to the network node based on determining that the wireless device has completed handover to a target cell.

<DELETED>

<DELETED>

<DELETED>

<DELETED>

A wireless device for handling a conditional mobility procedure according to some embodiments includes at least one transceiver, at least one processor, and at least one memory coupled to the at least one processor and the at least one transceiver. The at least one memory stores program code that when executed by the at least one processor causes the at least one processor to perform operations including determining information from measurements relating to a trigger condition that triggers the conditional mobility procedure to be performed by the wireless device, and transmitting the information via the at least one to a network node. The information relates to one or more non-triggered potential target cells and is transmitted to the network node based on determining that the wireless device has completed handover to a target cell.

<DELETED>

<DELETED>

A method by a network node for handling a conditional mobility procedure according to some embodiments includes receiving information from a wireless device generated from measurements relating to a trigger condition that triggers the conditional mobility procedure to be performed by the wireless device, and adapting, based on the information, how the wireless device or a second wireless device is provided with a conditional mobility configuration. The information is received from the wireless device based on the wireless device completing handover to a target cell. The information relates to one or more non-triggered potential target cells.

<DELETED>

<DELETED>

<DELETED>

<DELETED>

<DELETED>

<DELETED>

<DELETED>

<DELETED>

A network node for a conditional mobility procedure according to some embodiments incudes at least one processor, and at least one memory coupled to the at least one processor. The at least one memory stores program code that when executed by the at least one processor causes the at least one processor to perform operations including receiving information from a wireless device generated from measurements relating to a trigger condition that triggers the conditional mobility procedure to be performed by the wireless device, and adapting, based on the information, how the wireless device or a second wireless device is provided with a conditional mobility configuration. The information is received from the wireless device based on the wireless device completing handover to a target cell. The information relates to one or more non-triggered potential target cells.

<DELETED>

<DELETED>

### BRIEF DESCRIPTION OF THE DRAWINGS

The accompanying drawings, which are included to provide a further understanding of the disclosure and are incorporated in a constitute a part of this application, illustrate certain non-limiting embodiments of inventive concepts. In the drawings:
**Figure 1** illustrates the operations and signaling flow between a UE, a source node and a target node during a handover procedure;
**Figure 2** illustrates operations and signaling flow between the UE, the source node and the target node during a conditional handover procedure;
**Figure 3** illustrates operations and data flow for handover preparation with a successful operation;
**Figure 4** illustrates operations and data flow for handover preparation with an unsuccessful operation;
**Figure 5** illustrates operations and data flow for handover cancel with a successful operation;
**Figure 6A** illustrates operations and data flow for a path switch request with a successful operation;
**Figure 6B** illustrates operations and data flow for a UE context release with successful operation for handover;
**Figure 7** illustrates the operations and signaling flow between the UE, the source node and the target node during a conditional resume procedure
**Figure 8** illustrates an example of how close a measurement relating to at least one non-triggered potential target cell was to fulfilling the trigger condition prior to another triggering condition being fulfilled.
**Figures 9A and 9B** are flowcharts of methods and operations that can be performed by wireless device, such as a UE, in accordance with some embodiments of the present disclosure;
**Figures 10A****,** **10B and 10C** are flowcharts of methods and operations that can be performed by a network node in accordance with some embodiments of the present disclosure;
**Figure 11** is a flowchart of further methods and operations that can be performed by a network node to generate feedback data configuration responsive to the adapting in accordance with some embodiments of the present disclosure;
**Figure 12** is a flowchart of methods and operations that may be performed by the wireless device responsive to the transmission of the feedback data configuration by the network node accordance with some embodiments of the present disclosure;
**Figure 13** is a block diagram illustrating components of a wireless device that are configured according to some embodiments;
**Figure 14** is a block diagram illustrating components of a network node of a wireless communication system that are configured according to some embodiments;
**Figure 15** is a block diagram of a wireless network in accordance with some embodiments of the present disclosure;

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter. The term "wireless device" is used in a non-limiting manner and, as explained below, can refer to any type of radio communication terminal. The term " wireless device" herein may be interchangeable replaced with the term "radio terminal," "radio communication terminal," "radio device," or "user equipment (UE)."

Selecting potential target cells and CHO triggering conditions based on early measurement reports is a delicate process, and the serving/source node can be far from certain that the resulting CHO configuration is optimal. Some embodiments described herein are based on a recognition that operations that could improve the basis for the CHO decision and resulting CHO configuration (including selection of potential target cells and CHO triggering conditions) would be beneficial to enable the source node to provide more optimal CHO configurations.

Two new work items for mobility enhancements in LTE and NR have started in 3GPP in release 16. The main objectives of the work items are to improve the robustness at handover and to decrease the interruption time at handover.

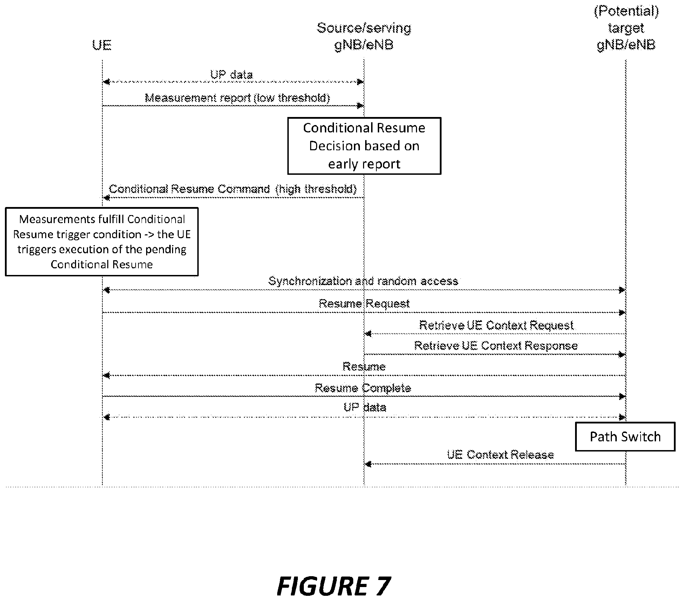

An alternative solution relying on context fetching, i.e. where the target node fetches the UE context from the source node when the UE connects to the target node, is referred to as "Conditional Resume". Conditional Resume, which is illustrated in **Figure 7** includes providing the UE with a condition which, when it is fulfilled, triggers the UE to execute RRC Resume. Note that the term "Resume" is reused because of the similarity with the RRC Resume procedure, but the UE is never actually suspended to RRC_INACTIVE or suspended state, but remains in RRC_CONNECTED state throughout the monitoring of the condition and the possible execution of the Conditional Resume.

The Conditional Resume procedure includes a method executed by a UE in RRC_CONNECTED state that include receiving a message containing at least one condition from the network and monitoring the fulfillment of the provided condition, and, upon the fulfillment of the condition, triggering an RRC Resume procedure or an equivalent procedure towards at least one target node in at least one target cell.

The Conditional Resume procedure and the Conditional Handover procedure can be considered as examples of conditional mobility procedures.

Although various embodiments are described in the context of Conditional Handover, these and other embodiments disclosed herein may be used with any type of conditional mobility procedure, such as Conditional Resume, and potentially with any other type of conditional procedures that are performed in respond to one or more conditions based on measurement quantities in one or more neighbor cells and possibly also the source/serving cell.

Some embodiments described herein based on a realization that continuous improvement of a process requires feedback on the performance of previous executions of the process. For example, the process of determining to configure a UE for CHO, the choice of potential target cell(s) and CHO triggering condition(s), the UE's subsequent monitoring of the CHO triggering condition(s) and finally the possible execution of the conditioned handover in a target cell may be improved with feedback relating to previous CHO events. To this end, some embodiments described herein are directed to operations for providing a network node or entity, such as a source gNB or a source eNB that executes a conditional mobility procedure with feedback information that can help to improve subsequent mobility procedures. For example the feedback may include information relating to the development of the measurement quantity/quantities related to the CHO triggering condition(s) during the time the UE monitors the concerned measurement quantity/quantities in relation to the CHO triggering condition(s).

Potential feedback information that a UE can be configured to provide can include any one or more of the following:
- How close the non-triggered potential target cell(s) was/were to being triggered.
- The value(s) of the quantity related to the CHO trigger condition in non-triggered potential target cell(s) when it was the furthest away from the CHO trigger condition.
- The value(s) of the quantity related to the CHO trigger condition in non-triggered potential target cell(s) when the CHO trigger condition was fulfilled for one of the potential target cells.
- Possible correlation between the values of the quantity related to the CHO trigger condition in two or more potential target cells.

The receiver of the feedback information, typically a source node, can use the feedback information to refine its strategy for determining when to configure a UE with CHO, which potential target cells to select and which CHO trigger condition to configure, especially in similar situations in the future. It will be appreciated that different potential target cells may have different trigger conditions associated with conditional mobility procedures. For example, a first potential target cell may have an associated first trigger condition that triggers conditional mobility and a second potential target cell may have an associated second trigger condition that triggers conditional mobility. The first and second trigger conditions may be the same or different, and may be associated with the same or different measurements.

In one embodiment, the UE may transmit feedback information to the target node when a conditional handover is executed and the UE connects in the target cell. The target node may forward the feedback information to the source node.

Embodiments disclosed herein may provide certain advantages. For example, embodiments disclosed herein may allow a network node, such as a gNB, an eNB, a (semi-)central radio network node, a core network node or a node or entity in the Operations and Maintenance system of a network, to receive feedback information relating to previously prepared CHO configurations. The feedback information may enable the network node to refine its future CHO decisions and CHO configuration processes and achieve continuously improved and more optimal CHO configurations.

The feedback information thus provided will give the source node information about how the configured potential target cell(s) developed in terms of the concerned measurement quantity/quantities in relation to the CHO triggering condition(s) during the monitoring time. For example, the source node maybe able to determine from the feedback information whether a certain potential target cell gets closer to trigger the CHO triggering condition or gets further away from it. Such information received from a first UE may be useful in similar situations in the future, e.g.in a situation where a second UE has reported similar measurement results and possibly similar movement trajectory and/or speed (e.g. indicated by Doppler spread and Timing Advance changes) as the first UE that the radio network node received the feedback information from. In that case, the network node may adapt the CHO configuration data provided to the second UE based on the feedback information received from the first UE.

The network node or entity receiving the feedback information is typically the source node/entity of a CHO (or other conditional mobility procedure), such as a source gNB or a source eNB, but the receiver of the feedback information may also be another node or entity such as a non-source gNB, a non-source eNB, a (semi-)central radio network node, a core network node or a node or entity in the Operations and Maintenance (O&M) system of the network. The feedback information may also be forwarded between nodes or entities in the network. For example, feedback information received by a target gNB of a CHO may be forwarded to the source gNB of the CHO.

Another way that forwarding may be involved may be that a network node, such as a gNB or an eNB that receives the feedback information from the UE may forward the feedback information, possibly via other network nodes, to the O&M system. The O&M system may in turn forward the information to one or more other network node(s), such as gNB(s) or eNB(s), possibly after processing and/or refining the information. The processing and/or refinement of the information may, for example, include determining instructions and/or configuration data to be sent to another network node, such as a gNB or an eNB.

A potential target cell for which the CHO triggering condition was not triggered is referred to as a non-triggered potential target cell. Some aspects in conjunction with CHO configurations involving multiple target cells (reflected in feedback information) that the source radio network node may be interested in particular, for the purpose of future adaptations of CHO configurations include:
- How close were the non-triggered potential target cells to being triggered?
- What was/were the value(s) of the concerned measurement quantity/quantities (i.e. the measurement quantity/quantities in relation to which the CHO triggering condition is defined) in the non-triggered potential target cells when the CHO condition was triggered and the handover was executed in the finally selected target cell?
- How did the developments of the concerned measurement quantity/quantities of one potential target cell relate to the corresponding development for another potential target cell (e.g. the potential target cell for which the CHO triggering condition eventually was fulfilled)? For instance, was there a systematic positive or negative correlated variation?
- What was/were the value(s) of the concerned measurement quantity/quantities when it/they was/were the furthest away from the CHO triggering condition in each potential target cell? This may be of interest both for the non-triggered potential target cells and the potential target cell for which the CHO triggering condition was eventually fulfilled.

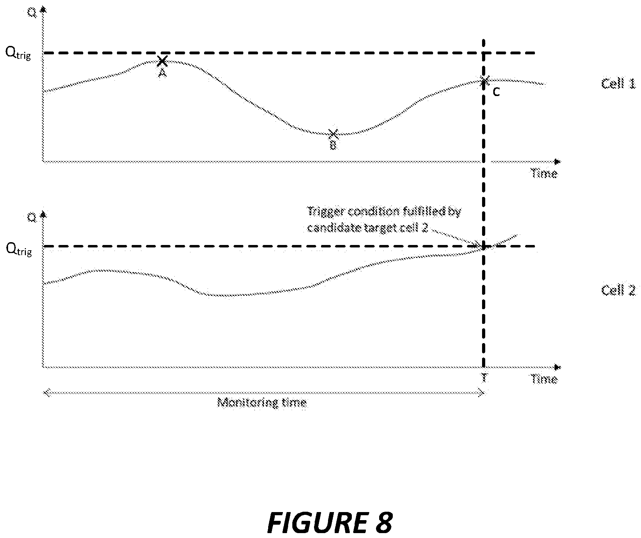

**Figure 8** illustrates some feedback information that may be provided by the UE to the network. For example, a UE may be provided with CHO command relating to two cells, Cell 1 and Cell 2. The UE may monitor a measurement quantity Q for both cells during a monitoring time and trigger a handover when the quantity Q passes a triggering condition Q_{trig} for one of the cells. As shown in **Figure 8**, the triggering condition is reached for Cell 2 at time T. The feedback information may include certain information about the measurements of the quantity Q for Cell 1. For example, the feedback information may indicate the closest point that Cell 1 came to triggering the CHO during the monitoring time (point A), the farthest point that Cell 1 came to triggering the CHO during the monitoring time (point B), and/or the value of the quantity Q for Cell 1 at the time the CHO was triggered for Cell 2 (point C).

Note that the above list is non-comprehensive and that other aspects may be of interest as feedback information too, such as statistical measures of the development of the concerned measurement quantity/quantities (i.e. the measurement quantity/quantities the triggering condition(s) were defined in relation to). Such statistical measures may include the average measurement value(s) or the variance or standard deviation or a list of measurement samples collected for a measurement quantity during the monitoring period. Any aspect related to the measurement quantity/quantities which the CHO triggering condition(s) are defined in relation to may be of interest and may be fed back from a UE to the source radio network node. Such feedback information may also contain information that does not have the form of measurement values of the measurement quantity/quantities which the CHO triggering condition(s) are defined in relation to. For example, if the CHO triggering condition is defined in terms of reference signal received power (RSRP), the feedback from the UE may also contain reference signal received quality (RSRQ) measurement values. In the case of network operation in unlicensed spectrum, the feedback information (whether it is related to the CHO condition or not) may also contain indications of the channel occupancy level in the potential target cells or the channel occupancy as experienced by the UE in general.

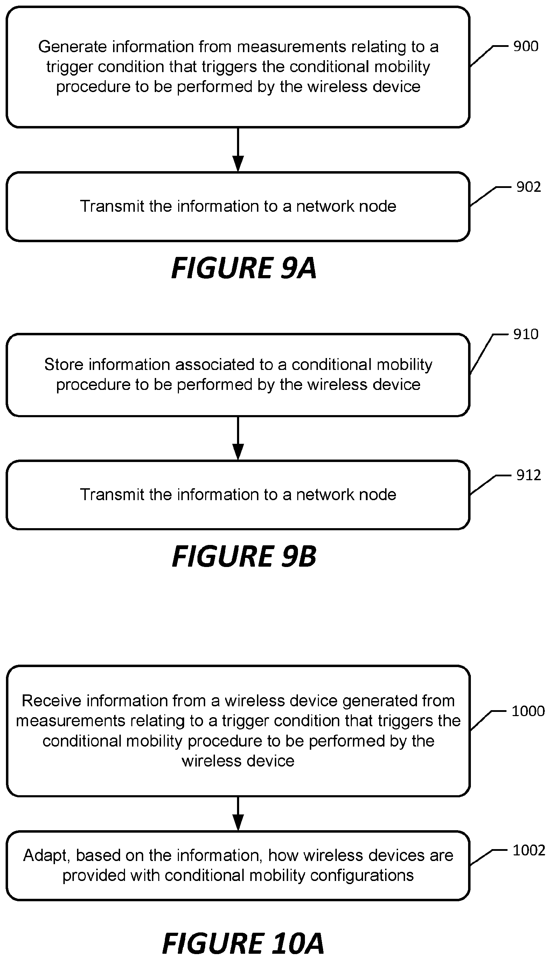

**Figure 9A** is a flowchart of illustrative methods and operations that can be performed by wireless device, such as UE, that is configured for a conditional mobility procedure. Referring to **Figure 9A**, at block 900, the methods and operations determine information such as feedback information, from measurements relating to a trigger condition that triggers the conditional mobility procedure to be performed by the wireless device. At block 902, the method and operations transmit the information to a network node.

**Figure 9B** illustrates further methods and operations that can be performed by a wireless device according to some embodiments. Referring to **Figure 9B**, a method by a wireless device for handling conditional mobility procedures includes, at block 910, storing information associated to a conditional mobility procedure to be performed by the wireless device, and transmitting the information to a network node (block 912).

The wireless device may store the information associated to the conditional mobility procedure upon execution of the conditional mobility procedure. In some embodiments, the information associated to the conditional mobility procedure includes information indicating that the conditional mobility procedure was successful.

In some embodiments, the information associated to the conditional mobility procedure includes information related to a triggering condition of the conditional mobility procedure.

In some embodiments, the information is transmitted to the network node in response to a request by the network node.

In some embodiments, the wireless device indicates to the network node that it has stored information regarding execution of a conditional mobility procedure. The indication may include a flag in an *RRCReconfigurationComplete* message.

**Figure 10A** is a flowchart of corresponding methods and operations that can be performed by a network node. Referring to **Figure 10A**, at block 1000, the network node receives information from a wireless device generated from measurements relating to a trigger condition that triggers a conditional mobility procedure to be performed by the wireless device. At block 1002, the network node adapts how wireless devices are further provided with conditional mobility configurations based on the information.

The network node may be a source node or a target node. In one embodiment, the conditional mobility procedure is a conditional resume procedure. In another embodiment, the conditional mobility procedure is a conditional handover procedure.

The information may be generated 900 based on determining how close a measurement relating to at least one non-triggered potential target cell was to fulfilling the trigger condition. The network node may perform the adapting 1002 using the information indicating how close a measurement relating to at least one non-triggered potential target cell was to fulfilling the trigger condition.

The information may be generated 900 based on determining at least one value of a measurement considered by the trigger condition with respect to at least one non-triggered potential target cell at a time when the trigger condition became fulfilled and handover is performed for a selected target cell. The network node may perform the adapting 1002 using the information indicating at least one value of a measurement considered by the trigger condition with respect to at least one non-triggered potential target cell at a time when the trigger condition became fulfilled and handover is performed for a selected target cell.

The information may alternatively or additionally be generated 900 based on determining a statistical correlation between values of measurements considered by the trigger condition relating to at least two potential target cells. The network node may perform the adapting 1002 using the information indicating a statistical correlation between values of measurements considered by the trigger condition relating to at least two potential target cells.

The information may alternatively or additionally be generated 900 based on comparison of a first trend over time in values of a measurement considered by the trigger condition with respect to a first potential target cell to a second trend over time in values of the measurement considered by the trigger condition with respect to a second potential target cell. The network node may perform the adapting 1002 using the information indicating a comparison of a first trend over time in values of a measurement considered by the trigger condition with respect to a first potential target cell to a second trend over time in values of the measurement considered by the trigger condition with respect to a second potential target cell. The information may be generated 900 based on determining whether the first trend over time and the second trend over time have a positive or negative correlated variation over time. In one embodiment the second potential target cell is the selected target cell. The network node may perform the adapting 1002 using the information indicating whether the first trend over time and the second trend over time have a positive or negative correlated variation over time. The second potential target cell may be the selected target cell

The information may alternatively or additionally be generated 900 based on identifying one value from among a set of values of a measurement considered by the trigger condition, that is furthest away from fulfilling the trigger condition. The network node may perform the adapting 1002 using the information identifying one value from among a set of values of a measurement considered by the trigger condition, that is furthest away from fulfilling the trigger condition.

The information may alternatively or additionally be generated 900 based on identifying for each of a plurality of target cells one value from among a set of values of a measurement, which is considered by the trigger condition and performed on the target cell, that is furthest away from fulfilling the trigger condition. The network node may perform the adapting 1002 using the information identifying for each of a plurality of target cells one value from among a set of values of a measurement, which is considered by the trigger condition and performed on the target cell, that is furthest away from fulfilling the trigger condition.

The information may alternatively or additionally be generated 900 based on determining a statistical representation of values of a measurement considered by the trigger condition during a monitoring time. The network node may perform the adapting 1002 using the information indicating a statistical representation of values of a measurement considered by the trigger condition during a monitoring time.

Some of the potential information mentioned above could in principle be provided during the monitoring period (i.e. before the UE connects in a target cell or the CHO is canceled) using the regular RRM measurement framework, but when serving the purpose of refining future CHO configurations, there is no need to provide the feedback in real-time, as it would serve its purpose equally well if reported later. Hence, reporting such measurement results across a potentially poor radio link in the source cell can be avoided, if all the information, including any information collected during the ongoing monitoring period, is provided when the UE has connected in a good-quality target cell. As a possible alternative, if the UE returns to good channel quality in the serving cell and the CHO is canceled, then the UE can report any relevant information to the serving gNB through the serving cell.

In one embodiment the information is transmitted 902 to the network node based on determining that the channel quality satisfy the defined threshold. In another embodiment, the information is transmitted to the network node based on determining that the wireless device has completed handover to a target cell.

In one embodiment, the UE is configured for feedback data collection and reporting using dedicated RRC signaling when the UE is provided with the CHO configuration. The feedback data configuration could thus be included in the same message as the CHO trigger condition and possibly other CHO configuration data, e.g. the *RRCReconfiguration* message or *RRCConditionalReconfiguration* message or *ConditionaIRRCReconfiguration* message or *ConditionalReconfiguration* message or *ConditionalHandoverConfiguration* message or *ConditionalHandoverCommand* message (or *RRCConnectionReconfiguration* message or *RRCConditionalConnectionReconfiguration* message or *ConditionaIRRCConnectionReconfiguration* message or *ConditionalConnectionReconfigurationMessage*). Alternatively, the configuration for feedback data collection and reporting may be conveyed via the system information. As yet another alternative, the configuration for feedback data collection and reporting may be standardized in one or more specification(s). As yet another alternative, the configuration for feedback data collection and reporting may be provided as a combination of any or all of the above (i.e. dedicated signaling, system information and/or standardization). The configuration for feedback data collection and reporting may e.g. contain instructions to collect one or more of the above described information types.

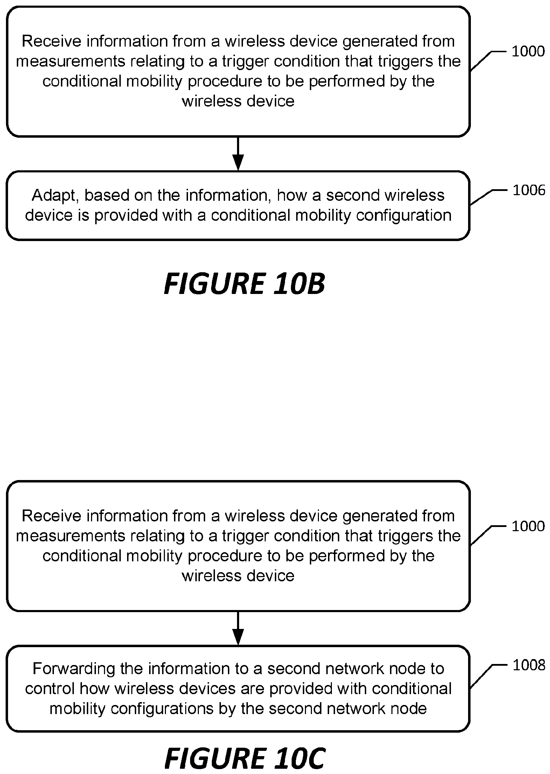

Referring to **Figure 10B**, after receiving the information at block 1000, the network node may adapt, based on the information, how a second wireless device is provided with a conditional mobility configuration (block 1006).

Referring to **Figure 10C**, after receiving the information at block 1000, the network node may forward the information to another network node to control how wireless devices are provided with conditional mobility configurations by the second node (block 1008).

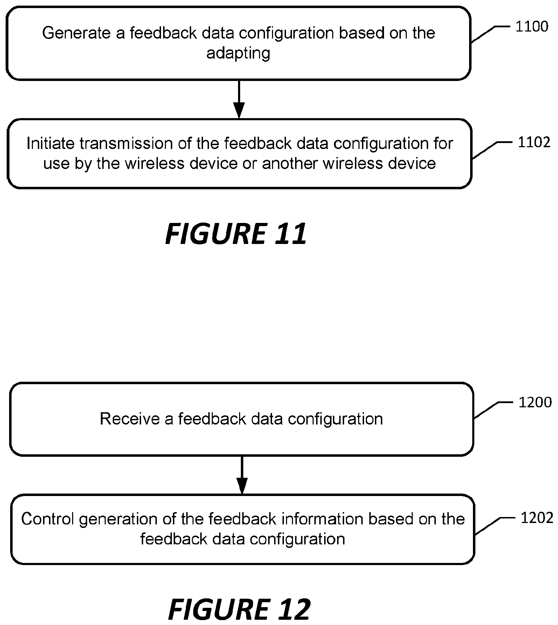

**Figure 11** is a flowchart of methods and operations that may perform by the network node to generate feedback data configuration responsive to the adapting 1002. The network node generates 1100 a feedback data configuration based on the adapting 1002. The network node initiates 1102 transmission of the feedback data configuration for use by the wireless device or another wireless device. The feedback data configuration may be transmitted through radio resource control signaling that also provides the wireless device with conditional handover configuration. The feedback data configuration may be transmitted in a same message as a configuration of the trigger condition.

The network node may generate 1100 the feedback data configuration based on the adapting, such that the feedback data configuration is generated to control another wireless device that is different from the wireless device from which the information is received. The network node may initiate 1102 transmission of the feedback data configuration through radio resource control signaling that also provides the another wireless device with conditional handover configuration. The feedback data configuration may be transmitting in a same message as a configuration of the trigger condition used by the another wireless device. The feedback data configuration may alternatively or additionally be transmitted through system information.

**Figure 12** is a flowchart of methods and operations that may be performed by the wireless device responsive to the transmission of the feedback data configuration by the network node. The wireless device receives a feedback data configuration, and controls 1202 further generation of the information based on the feedback data configuration.

The wireless device may receive the feedback data configuration in radio resource control signaling that also provides the wireless device with conditional handover configuration. The feedback data configuration may be received in a same message as a configuration of the trigger condition. Alternatively or additionally, the wireless device may receive the feedback data configuration through a system information transmission.

The wireless device may transmit 902 the information to a target network node in radio resource control signaling while confirming completion of handover when connecting in a target cell.

In another embodiment which may provide particularly beneficial operations, the UE transmits the information in the *RRCReconfigurationComplete* message or *RRCConditionalReconfigurationComplete* message or *ConditionalHandoverComplete* message (or *RRCConnectionReconfigurationComplete* message or *RRCConditionalConnectionReconfigurationComplete* message) which the UE transmits (after having transmitted a random access preamble and having received a Random Access Response) to the target node to confirm the completion of the handover when connecting in the target cell. The target node forwards the information to the source node, e.g. in the UE Context Release message (i.e. using XnAP or X2AP).

Accordingly, the information may be received by the network node in radio resource control signaling while the wireless device is confirming completion of handover when connecting in a target cell. The network node may be a target node that receives the information as part of a confirmation of completion of a handover by the wireless device when connecting to a target cell, and the network node may then forward the information to a source node.

As an option, the source node could inform a potential target node of the information collection and reporting the concerned UE will be configured with, so that the potential target node can adapt the UL grant included in the Random Access Response to the UE accordingly, in case the UE eventually executes the conditional handover in the target node.

### Example Wireless Device and Network Node:

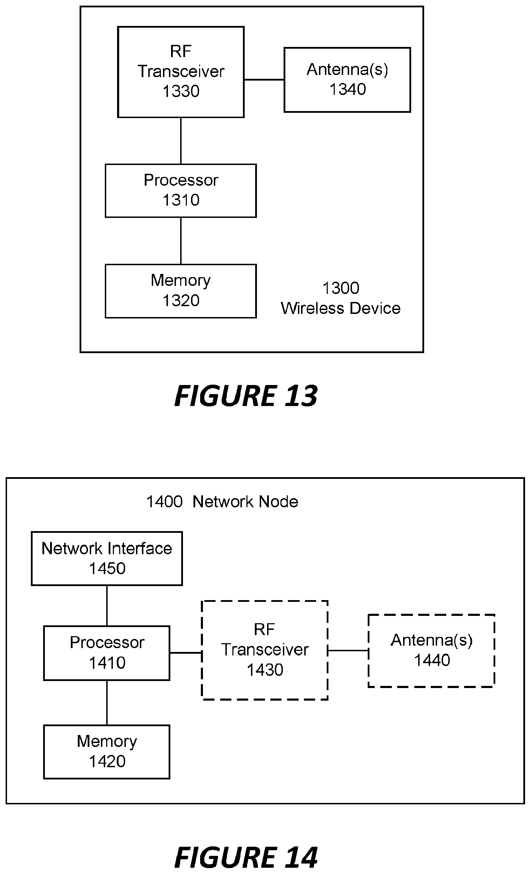

**Figure 13** is a block diagram illustrating components of a wireless device 1300 that are configured according to some embodiments. The wireless device 1300 can include, without limitation, a radio terminal, radio communication terminal, radio device, a UE, etc. The terminal 1300 includes a RF transceiver 1330 comprising one or more power amplifiers that transmit and receive through one or more antennas 1340 to provide, for example, uplink and downlink radio communications with a radio network node (e.g., a base station, eNB, gNB, etc.) of a wireless communication system and/or which may provide sidelink communications with another wireless device. The terminal 1300 further includes a processor circuit 1310 (also referred to as a processor) coupled to the RF transceiver 1330 and a memory circuit 1320 (also referred to as memory). The memory 1320 stores computer readable program code that when executed by the processor 1310 causes the processor 1310 to perform operations according to embodiments disclosed herein.

**Figure 14** is a block diagram illustrating a network node 1400 of a wireless communication system that is configured according to some embodiments. The network node 1400 includes a processor circuit 1410 (also referred to as a processor), a memory circuit 1420 (also referred to as memory), and a network interface 1450 (e.g., wired network interface and/or wireless network interface) configured to communicate with other network nodes. The network node 1400 may be configured as a radio network node containing a RF transceiver 1430 with one or more power amplifiers that transmit and receive through one or more antennas 1440 which may be part of the network node 1400 or may be communicatively connected to but geographically spaced apart from the network node 1400. The memory 1420 stores computer readable program code that when executed by the processor 1410 causes the processor 1410 to perform operations according to embodiments disclosed herein.

Thus, in accordance with some embodiments, a UE which is configured for conditional handover (or another conditional mobility procedure) is configured to collect and report feedback information related to the non-triggered potential target cell(s) (e.g. in terms of values of the quantity related to the CHO trigger condition). The UE collects this feedback information while monitoring the CHO trigger condition(s) and transmits it to the target node when executing the conditional handover (i.e. when the CHO trigger condition is fulfilled for one of the potential target cell(s)). The target node forwards the received feedback information to the source node (or possibly another node). The source node can use the feedback information to refine its strategy for determining when to configure a UE with CHO, which potential target cells to select and which CHO trigger condition to configure, especially in similar situations in the future.

### Abbreviations and Explanations:

- 3GPP: 3rd Generation Partnership Project
- 5G: 5th Generation
- 5GC: 5G Core network
- AMF: Access and Mobility management Function
- AS: Access Stratum
- ASN.1: Abstract Syntax Notation One
- CFRA: Contention Free Random Access
- CHO: Conditional Handover
- CN: Core Network
- C-RNTI: Cell Radio Network Temporary Identifier
- dB: decibel
- DC: Dual Connectivity
- DL: Downlink
- eNB: eNodeB
- eNodeB: Evolved NodeB
- EPC: Evolved Packet Core
- E-UTRA: Evolved Universal Terrestrial Radio Access
- E-UTRAN: Evolved Universal Terrestrial Radio Access Network
- FFS: For Further Study
- gNB/gNodeB: A radio base station in NR.
- GPRS: General Packet Radio Service
- GTP: GPRS Tunneling Protocol
- HO: Handover
- ID: Identity/Identifier
- IE: Information Element
- LTE: Long Term Evolution
- MAC: Medium Access Control
- MR-DC: Multi-Radio Dual Connectivity
- Msg: Message
- NG: The interface/reference point between NG-RAN and 5GC.
- NG-RAN: Next Generation Radio Access Network
- NR: New Radio
- O&M: Operation and Maintenance
- PDU: Packet Data Unit
- QoS: Quality of Service
- RA: Random Access
- RACH: Random Access Channel
- RAN: Radio Access Network
- RAT: Radio Access Technology
- RRC: Radio Resource Control
- RRM: Radio Resource Management
- RS: Reference Signal
- RSRP: Reference Signal Received Power
- RSRQ: Reference Signal Received Quality
- S1: The interface/reference point between E-UTRAN and EPC.
- SI: System Information
- SMF: Session Management Function
- SRB: Signaling Radio Bearer
- TS: Technical Specification
- TSG: Technical Steering Group
- TX: Transmission/Transmitter/Transmit
- UE: User Equipment
- UP: User Plane
- UPF: User Plane Function
- Uu: The interface/reference point between a gNB/eNB and a UE
- WG: Working Group
- X2: The interface/reference point between two eNBs.
- X2AP: X2 Application Protocol
- Xn: The interface/reference point between two gNBs.
- XnAP: Xn Application Protocol

Further definitions and embodiments are discussed below:

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved.

Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without departing from the principles of the present inventive concepts as defined by the appended claims. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the scope of present inventive concepts. Thus, to the maximum extent allowed by law, the scope of present inventive concepts are to be determined by the broadest permissible interpretation of the present disclosure including the examples of embodiments, and shall not be restricted or limited by the foregoing detailed description, as long as they fall into the scope defined by the appended claims.

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

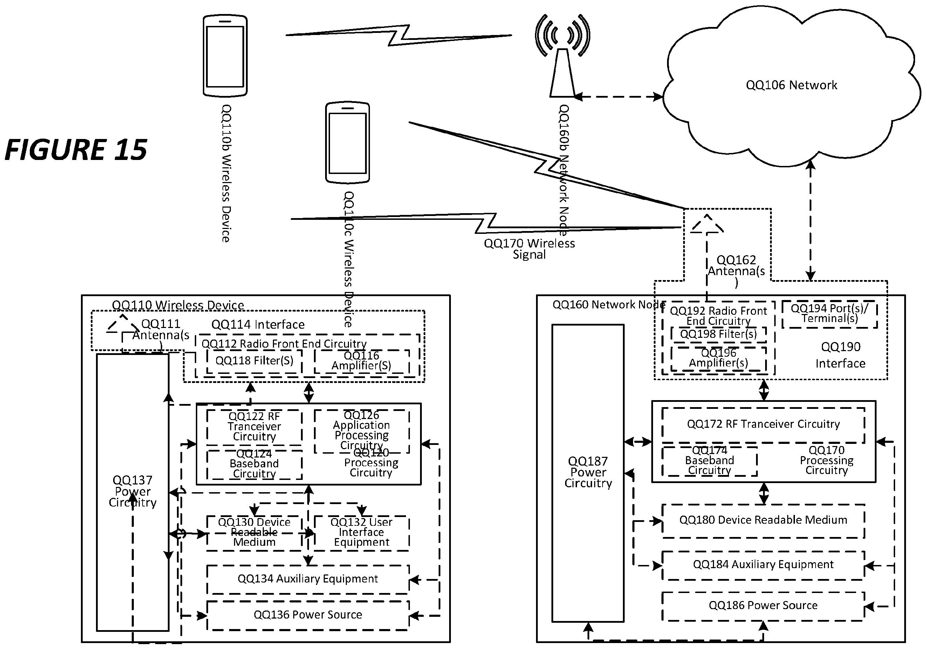

**Figure 15****:** A wireless network in accordance with some embodiments.

Although the subject matter described herein may be implemented in any appropriate type of system using any suitable components, the embodiments disclosed herein are described in relation to a wireless network, such as the example wireless network illustrated in **Figure 15****.** For simplicity, the wireless network of **Figure 15** only depicts network QQ106, network nodes QQ160 and QQ160b, and WDs QQ110, QQ110b, and QQ110c (also referred to as mobile terminals). In practice, a wireless network may further include any additional elements suitable to support communication between wireless devices or between a wireless device and another communication device, such as a landline telephone, a service provider, or any other network node or end device. Of the illustrated components, network node QQ160 and wireless device (WD) QQ110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network QQ106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node QQ160 and WD QQ1 10 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In **Figure 15****,** network node QQ160 includes processing circuitry QQ170, device readable medium QQ180, interface QQ190, auxiliary equipment QQ184, power source QQ186, power circuitry QQ187, and antenna QQ162. Although network node QQ160 illustrated in the example wireless network of **Figure 15** may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node QQ160 are depicted as single boxes located within a larger box, or nested within multiple boxes, in practice, a network node may comprise multiple different physical components that make up a single illustrated component (e.g., device readable medium QQ180 may comprise multiple separate hard drives as well as multiple RAM modules).

Similarly, network node QQ160 may be composed of multiple physically separate components (e.g., a NodeB component and a RNC component, or a BTS component and a BSC component, etc.), which may each have their own respective components. In certain scenarios in which network node QQ160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node QQ160 may be configured to support multiple radio access technologies (RATs). In such embodiments, some components may be duplicated (e.g., separate device readable medium QQ180 for the different RATs) and some components may be reused (e.g., the same antenna QQ162 may be shared by the RATs). Network node QQ160 may also include multiple sets of the various illustrated components for different wireless technologies integrated into network node QQ160, such as, for example, GSM, WCDMA, LTE, NR, WiFi, or Bluetooth wireless technologies. These wireless technologies may be integrated into the same or different chip or set of chips and other components within network node QQ160.

Processing circuitry QQ170 is configured to perform any determining, calculating, or similar operations (e.g., certain obtaining operations) described herein as being provided by a network node. These operations performed by processing circuitry QQ170 may include processing information obtained by processing circuitry QQ170 by, for example, converting the obtained information into other information, comparing the obtained information or converted information to information stored in the network node, and/or performing one or more operations based on the obtained information or converted information, and as a result of said processing making a determination.

Processing circuitry QQ170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node QQ160 components, such as device readable medium QQ180, network node QQ160 functionality. For example, processing circuitry QQ170 may execute instructions stored in device readable medium QQ180 or in memory within processing circuitry QQ170. Such functionality may include providing any of the various wireless features, functions, or benefits discussed herein. In some embodiments, processing circuitry QQ170 may include a system on a chip (SOC).

In some embodiments, processing circuitry QQ170 may include one or more of radio frequency (RF) transceiver circuitry QQ172 and baseband processing circuitry QQ174. In some embodiments, radio frequency (RF) transceiver circuitry QQ172 and baseband processing circuitry QQ174 may be on separate chips (or sets of chips), boards, or units, such as radio units and digital units. In alternative embodiments, part or all of RF transceiver circuitry QQ172 and baseband processing circuitry QQ174 may be on the same chip or set of chips, boards, or units.

In certain embodiments, some or all of the functionality described herein as being provided by a network node, base station, eNB or other such network device may be performed by processing circuitry QQ170 executing instructions stored on device readable medium QQ180 or memory within processing circuitry QQ170. In alternative embodiments, some or all of the functionality may be provided by processing circuitry QQ170 without executing instructions stored on a separate or discrete device readable medium, such as in a hard-wired manner. In any of those embodiments, whether executing instructions stored on a device readable storage medium or not, processing circuitry QQ170 can be configured to perform the described functionality. The benefits provided by such functionality are not limited to processing circuitry QQ170 alone or to other components of network node QQ160, but are enjoyed by network node QQ160 as a whole, and/or by end users and the wireless network generally.

Device readable medium QQ180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry QQ170. Device readable medium QQ180 may store any suitable instructions, data or information, including a computer program, software, an application including one or more of logic, rules, code, tables, etc. and/or other instructions capable of being executed by processing circuitry QQ170 and, utilized by network node QQ160. Device readable medium QQ180 may be used to store any calculations made by processing circuitry QQ170 and/or any data received via interface QQ190. In some embodiments, processing circuitry QQ170 and device readable medium QQ180 may be considered to be integrated.

Interface QQ190 is used in the wired or wireless communication of signalling and/or data between network node QQ160, network QQ106, and/or WDs QQ110. As illustrated, interface QQ190 comprises port(s)/terminal(s) QQ194 to send and receive data, for example to and from network QQ106 over a wired connection. Interface QQ190 also includes radio front end circuitry QQ192 that may be coupled to, or in certain embodiments a part of, antenna QQ162. Radio front end circuitry QQ192 comprises filters QQ198 and amplifiers QQ196. Radio front end circuitry QQ192 may be connected to antenna QQ162 and processing circuitry QQ170. Radio front end circuitry may be configured to condition signals communicated between antenna QQ162 and processing circuitry QQ170. Radio front end circuitry QQ192 may receive digital data that is to be sent out to other network nodes or WDs via a wireless connection. Radio front end circuitry QQ192 may convert the digital data into a radio signal having the appropriate channel and bandwidth parameters using a combination of filters QQ198 and/or amplifiers QQ196. The radio signal may then be transmitted via antenna QQ162. Similarly, when receiving data, antenna QQ162 may collect radio signals which are then converted into digital data by radio front end circuitry QQ192. The digital data may be passed to processing circuitry QQ170. In other embodiments, the interface may comprise different components and/or different combinations of components.

In certain alternative embodiments, network node QQ160 may not include separate radio front end circuitry QQ192, instead, processing circuitry QQ170 may comprise radio front end circuitry and may be connected to antenna QQ162 without separate radio front end circuitry QQ192. Similarly, in some embodiments, all or some of RF transceiver circuitry QQ172 may be considered a part of interface QQ190. In still other embodiments, interface QQ190 may include one or more ports or terminals QQ194, radio front end circuitry QQ192, and RF transceiver circuitry QQ172, as part of a radio unit (not shown), and interface QQ190 may communicate with baseband processing circuitry QQ174, which is part of a digital unit (not shown).

Antenna QQ162 may include one or more antennas, or antenna arrays, configured to send and/or receive wireless signals. Antenna QQ162 may be coupled to radio front end circuitry QQ192 and may be any type of antenna capable of transmitting and receiving data and/or signals wirelessly. In some embodiments, antenna QQ162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna QQ162 may be separate from network node QQ160 and may be connectable to network node QQ160 through an interface or port.

Antenna QQ162, interface QQ190, and/or processing circuitry QQ170 may be configured to perform any receiving operations and/or certain obtaining operations described herein as being performed by a network node. Any information, data and/or signals may be received from a wireless device, another network node and/or any other network equipment. Similarly, antenna QQ162, interface QQ190, and/or processing circuitry QQ170 may be configured to perform any transmitting operations described herein as being performed by a network node. Any information, data and/or signals may be transmitted to a wireless device, another network node and/or any other network equipment.

Power circuitry QQ187 may comprise, or be coupled to, power management circuitry and is configured to supply the components of network node QQ160 with power for performing the functionality described herein. Power circuitry QQ187 may receive power from power source QQ186. Power source QQ186 and/or power circuitry QQ187 may be configured to provide power to the various components of network node QQ160 in a form suitable for the respective components (e.g., at a voltage and current level needed for each respective component). Power source QQ186 may either be included in, or external to, power circuitry QQ187 and/or network node QQ160. For example, network node QQ160 may be connectable to an external power source (e.g., an electricity outlet) via an input circuitry or interface such as an electrical cable, whereby the external power source supplies power to power circuitry QQ187. As a further example, power source QQ186 may comprise a source of power in the form of a battery or battery pack which is connected to, or integrated in, power circuitry QQ187. The battery may provide backup power should the external power source fail. Other types of power sources, such as photovoltaic devices, may also be used.

Alternative embodiments of network node QQ160 may include additional components beyond those shown in **Figure 15** that may be responsible for providing certain aspects of the network node's functionality, including any of the functionality described herein and/or any functionality necessary to support the subject matter described herein. For example, network node QQ160 may include user interface equipment to allow input of information into network node QQ160 and to allow output of information from network node QQ160. This may allow a user to perform diagnostic, maintenance, repair, and other administrative functions for network node QQ160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE or other terminal implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device QQ110 includes antenna QQ111, interface QQ114, processing circuitry QQ120, device readable medium QQ130, user interface equipment QQ132, auxiliary equipment QQ134, power source QQ136 and power circuitry QQ137. WD QQ110 may include multiple sets of one or more of the illustrated components for different wireless technologies supported by WD QQ110, such as, for example, GSM, WCDMA, LTE, NR, WiFi, WiMAX, or Bluetooth wireless technologies, just to mention a few. These wireless technologies may be integrated into the same or different chips or set of chips as other components within WD QQ110.

Antenna QQ111 may include one or more antennas or antenna arrays, configured to send and/or receive wireless signals, and is connected to interface QQ114. In certain alternative embodiments, antenna QQ111 may be separate from WD QQ110 and be connectable to WD QQ110 through an interface or port. Antenna QQ111, interface QQ114, and/or processing circuitry QQ120 may be configured to perform any receiving or transmitting operations described herein as being performed by a WD. Any information, data and/or signals may be received from a network node and/or another WD. In some embodiments, radio front end circuitry and/or antenna QQ111 may be considered an interface.

As illustrated, interface QQ114 comprises radio front end circuitry QQ112 and antenna QQ111. Radio front end circuitry QQ112 comprise one or more filters QQ118 and amplifiers QQ116. Radio front end circuitry QQ112 is connected to antenna QQ111 and processing circuitry QQ120, and is configured to condition signals communicated between antenna QQ111 and processing circuitry QQ120. Radio front end circuitry QQ112 may be coupled to or a part of antenna QQ111. In some embodiments, WD QQ110 may not include separate radio front end circuitry QQ112; rather, processing circuitry QQ120 may comprise radio front end circuitry and may be connected to antenna QQ111. Similarly, in some embodiments, some or all of RF transceiver circuitry QQ122 may be considered a part of interface QQ114. Radio front end circuitry QQ112 may receive digital data that is to be sent out to other network nodes or WDs via a wireless connection. Radio front end circuitry QQ112 may convert the digital data into a radio signal having the appropriate channel and bandwidth parameters using a combination of filters QQ118 and/or amplifiers QQ116. The radio signal may then be transmitted via antenna QQ111. Similarly, when receiving data, antenna QQ111 may collect radio signals which are then converted into digital data by radio front end circuitry QQ112. The digital data may be passed to processing circuitry QQ120. In other embodiments, the interface may comprise different components and/or different combinations of components.

Processing circuitry QQ120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD QQ110 components, such as device readable medium QQ130, WD QQ110 functionality. Such functionality may include providing any of the various wireless features or benefits discussed herein. For example, processing circuitry QQ120 may execute instructions stored in device readable medium QQ130 or in memory within processing circuitry QQ120 to provide the functionality disclosed herein.

As illustrated, processing circuitry QQ120 includes one or more of RF transceiver circuitry QQ122, baseband processing circuitry QQ124, and application processing circuitry QQ126. In other embodiments, the processing circuitry may comprise different components and/or different combinations of components. In certain embodiments processing circuitry QQ120 of WD QQ110 may comprise a SOC. In some embodiments, RF transceiver circuitry QQ122, baseband processing circuitry QQ124, and application processing circuitry QQ126 may be on separate chips or sets of chips. In alternative embodiments, part or all of baseband processing circuitry QQ124 and application processing circuitry QQ126 may be combined into one chip or set of chips, and RF transceiver circuitry QQ122 may be on a separate chip or set of chips. In still alternative embodiments, part or all of RF transceiver circuitry QQ122 and baseband processing circuitry QQ124 may be on the same chip or set of chips, and application processing circuitry QQ126 may be on a separate chip or set of chips. In yet other alternative embodiments, part or all of RF transceiver circuitry QQ122, baseband processing circuitry QQ124, and application processing circuitry QQ126 may be combined in the same chip or set of chips. In some embodiments, RF transceiver circuitry QQ122 may be a part of interface QQ114. RF transceiver circuitry QQ122 may condition RF signals for processing circuitry QQ120.

In certain embodiments, some or all of the functionality described herein as being performed by a WD may be provided by processing circuitry QQ120 executing instructions stored on device readable medium QQ130, which in certain embodiments may be a computer-readable storage medium. In alternative embodiments, some or all of the functionality may be provided by processing circuitry QQ120 without executing instructions stored on a separate or discrete device readable storage medium, such as in a hard-wired manner. In any of those particular embodiments, whether executing instructions stored on a device readable storage medium or not, processing circuitry QQ120 can be configured to perform the described functionality. The benefits provided by such functionality are not limited to processing circuitry QQ120 alone or to other components of WD QQ110, but are enjoyed by WD QQ110 as a whole, and/or by end users and the wireless network generally.

Processing circuitry QQ120 may be configured to perform any determining, calculating, or similar operations (e.g., certain obtaining operations) described herein as being performed by a WD. These operations, as performed by processing circuitry QQ120, may include processing information obtained by processing circuitry QQ120 by, for example, converting the obtained information into other information, comparing the obtained information or converted information to information stored by WD QQ110, and/or performing one or more operations based on the obtained information or converted information, and as a result of said processing making a determination.

Device readable medium QQ130 may be operable to store a computer program, software, an application including one or more of logic, rules, code, tables, etc. and/or other instructions capable of being executed by processing circuitry QQ120. Device readable medium QQ130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry QQ120. In some embodiments, processing circuitry QQ120 and device readable medium QQ130 may be considered to be integrated.

User interface equipment QQ132 may provide components that allow for a human user to interact with WD QQ110. Such interaction may be of many forms, such as visual, audial, tactile, etc. User interface equipment QQ132 may be operable to produce output to the user and to allow the user to provide input to WD QQ110. The type of interaction may vary depending on the type of user interface equipment QQ132 installed in WD QQ110. For example, if WD QQ110 is a smart phone, the interaction may be via a touch screen; if WD QQ110 is a smart meter, the interaction may be through a screen that provides usage (e.g., the number of gallons used) or a speaker that provides an audible alert (e.g., if smoke is detected). User interface equipment QQ132 may include input interfaces, devices and circuits, and output interfaces, devices and circuits. User interface equipment QQ132 is configured to allow input of information into WD QQ110, and is connected to processing circuitry QQ120 to allow processing circuitry QQ120 to process the input information. User interface equipment QQ132 may include, for example, a microphone, a proximity or other sensor, keys/buttons, a touch display, one or more cameras, a USB port, or other input circuitry. User interface equipment QQ132 is also configured to allow output of information from WD QQ110, and to allow processing circuitry QQ120 to output information from WD QQ110. User interface equipment QQ132 may include, for example, a speaker, a display, vibrating circuitry, a USB port, a headphone interface, or other output circuitry. Using one or more input and output interfaces, devices, and circuits, of user interface equipment QQ132, WD QQ110 may communicate with end users and/or the wireless network, and allow them to benefit from the functionality described herein.

Auxiliary equipment QQ134 is operable to provide more specific functionality which may not be generally performed by WDs. This may comprise specialized sensors for doing measurements for various purposes, interfaces for additional types of communication such as wired communications etc. The inclusion and type of components of auxiliary equipment QQ134 may vary depending on the embodiment and/or scenario.

Power source QQ136 may, in some embodiments, be in the form of a battery or battery pack. Other types of power sources, such as an external power source (e.g., an electricity outlet), photovoltaic devices or power cells, may also be used. WD QQ110 may further comprise power circuitry QQ137 for delivering power from power source QQ136 to the various parts of WD QQ110 which need power from power source QQ136 to carry out any functionality described or indicated herein. Power circuitry QQ137 may in certain embodiments comprise power management circuitry. Power circuitry QQ137 may additionally or alternatively be operable to receive power from an external power source; in which case WD QQ110 may be connectable to the external power source (such as an electricity outlet) via input circuitry or an interface such as an electrical power cable. Power circuitry QQ137 may also in certain embodiments be operable to deliver power from an external power source to power source QQ136. This may be, for example, for the charging of power source QQ136. Power circuitry QQ137 may perform any formatting, converting, or other modification to the power from power source QQ136 to make the power suitable for the respective components of WD QQ110 to which power is supplied.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

## Claims

1. A method performed by a wireless device (1300) for handling a conditional mobility procedure, the method comprising:
determining (900) information from measurements relating to a trigger condition that triggers the conditional mobility procedure to be performed by the wireless device, wherein the information relates to one or more non-triggered potential target cells, which are potential target cells of the conditional mobility procedure, for which the trigger condition was not triggered; and
transmitting (902) the information to a network node (1400);
wherein the information is transmitted to the network node based on determining that the wireless device has completed handover to a target cell.

2. The method of Claim 1, wherein the trigger condition comprises a first trigger condition, and wherein the information is generated based on determining how close a measurement relating to at least one non-triggered potential target cell was to fulfilling a second trigger condition for the non-triggered potential target cell.

3. The method of any of Claims 1 or 2, wherein the information is generated based on determining a statistical correlation between values of measurements considered by trigger conditions relating to at least two potential target cells.

4. The method of Claim 1, wherein the information is generated based on comparison of a first trend over time in values of a measurement considered by a first trigger condition with respect to a first potential target cell to a second trend over time in values of the measurement considered by a second trigger condition with respect to a second potential target cell.

5. The method of any of Claims 1 to 4, wherein the information is generated based on identifying one value from among a set of values of a measurement considered by the trigger condition, that is furthest away from fulfilling the trigger condition.

6. The method of any of Claims 1 to 5, wherein the information is generated based on determining a statistical representation of values of a measurement considered by the trigger condition during a monitoring time.

7. The method of any of Claims 1 to 6, wherein the information is transmitted to the network node based on determining that channel quality satisfies a defined threshold.

8. A wireless device (1300) for handling a conditional mobility procedure, the wireless device comprising:
at least one transceiver (1330);
at least one processor (1310); and
at least one memory (1320) coupled to the at least one processor and the at least one transceiver, wherein the at least one memory stores program code that when executed by the at least one processor causes the at least one processor to perform the method according to any one of claims 1 to 7.

9. A method performed by a network node (1400) for handling a conditional mobility procedure, the method comprising:
receiving (1000) information from a wireless device (1300) generated from measurements relating to a trigger condition that triggers the conditional mobility procedure to be performed by the wireless device, wherein the information is received from the wireless device based on the wireless device completing handover to a target cell and wherein the information relates to one or more non-triggered potential target cells, which are potential target cells of the conditional mobility procedure, for which the trigger condition was not triggered; and
adapting (1002), based on the information, how the wireless device or a second wireless device is provided with a conditional mobility configuration.

10. The method of Claim 9, wherein the adapting is performed using the information indicating how close a measurement relating to at least one non-triggered potential target cell was to fulfilling the trigger condition.

11. The method of Claim 10, wherein the adapting is performed using the information indicating a statistical correlation between values of measurements considered by the trigger condition relating to at least two potential target cells.

12. The method of any of Claims 10 or 11, wherein the adapting is performed using the information indicating a comparison of a first trend over time in values of a measurement considered by the trigger condition with respect to a first potential target cell to a second trend over time in values of the measurement considered by the trigger condition with respect to a second potential target cell.

13. The method of any of Claims 9, wherein the information is generated based on identifying one value from among a set of values of a measurement considered by the trigger condition, that is furthest away from fulfilling the trigger condition.

14. The method of any of Claims 9 to 13, wherein the adapting is performed using the information indicating a statistical representation of values of a measurement considered by the trigger condition during a monitoring time.

15. A network node (1400) for a conditional mobility procedure, the network node comprising:
at least one processor (1410); and
at least one memory (1420) coupled to the at least one processor (1410), wherein the at least one memory (1420) stores program code that when executed by the at least one processor (1410) causes the at least one processor (1410) to perform the method according to any one of claims 9 to 14.

## Patentansprüche

1. Verfahren, das durch eine Drahtlosvorrichtung (1300) zum Handhaben einer Prozedur für bedingte Mobilität durchgeführt wird, wobei das Verfahren Folgendes umfasst:
Bestimmen (900) von Informationen aus Messungen in Bezug auf eine Auslösebedingung, die auslöst, dass die Prozedur für bedingte Mobilität durch die Drahtlosvorrichtung durchgeführt wird, wobei die Informationen sich auf eine oder mehrere nicht ausgelöste potenzielle Zielzellen beziehen, die potenzielle Zielzellen der Prozedur für bedingte Mobilität sind, für die die Auslösebedingung nicht ausgelöst wurde; und
Übertragen (902) der Informationen an einen Netzwerkknoten (1400) ;
wobei die Informationen basierend auf dem Bestimmen übertragen werden, dass die Drahtlosvorrichtung einen Handover an eine Zielzelle abgeschlossen hat.

2. Verfahren nach Anspruch 1, wobei die Auslösebedingung eine erste Auslösebedingung umfasst und wobei die Informationen basierend darauf generiert werden, wie dicht eine Messung in Bezug auf mindestens eine nicht ausgelöste potenzielle Zielzelle an dem Erfüllen einer zweiten Auslösebedingung für die nicht ausgelöste potenzielle Zielzelle war.

3. Verfahren nach einem der Ansprüche 1 oder 2, wobei die Informationen basierend auf dem Bestimmen einer statistischen Korrelation zwischen Werten generiert werden, die durch die Auslösebedingungen in Bezug auf die mindestens zwei potenziellen Zielzellen berücksichtigt werden.

4. Verfahren nach Anspruch 1, wobei die Informationen basierend auf einem Vergleich zwischen einem ersten Trend im Zeitverlauf von Werten einer Messung, die von einer ersten Auslösebedingung hinsichtlich einer ersten potenziellen Zielzelle berücksichtigt wird, mit einem zweiten Trend im Zeitverlauf von Werten der Messung, die von einer zweiten Auslösebedingung hinsichtlich einer zweiten potenziellen Zielzelle berücksichtigt wird, generiert werden.

5. Verfahren nach einem der Ansprüche 1 bis 4, wobei die Informationen basierend auf Identifizieren eines Werts aus dem Satz von Werten einer Messung generiert werden, die durch die Auslösebedingung berücksichtigt wird, der am weitesten vom Erfüllen der Auslösebedingung entfernt ist.

6. Verfahren nach einem der Ansprüche 1 bis 5, wobei die Informationen aus Bestimmen einer statistischen Darstellung von Werten einer Messung, die durch die Auslösebedingung berücksichtigt wird, während einer Überwachungszeit generiert werden.

7. Verfahren nach einem der Ansprüche 1 bis 6, wobei die Informationen an den Netzwerkknoten übertragen werden, basierend auf dem Bestimmen, dass die Kanalqualität einen definierten Schwellenwert erfüllt.

8. Drahtlosvorrichtung (1300) zum Handhaben einer Prozedur für bedingte Mobilität, wobei die Drahtlosvorrichtung Folgendes umfasst:
mindestens einen Sendeempfänger (1330);
mindestens einen Prozessor(1310); und
mindestens einen Speicher (1320), der an den mindestens einen Prozessor und den mindestens einen Sendeempfänger gekoppelt ist, wobei der mindestens eine Speicher Programmcode speichert, der bei Ausführung durch den mindestens einen Prozessor, den mindestens einen Prozessor dazu veranlasst, das Verfahren nach einem der Ansprüche 1 bis 7 durchzuführen.

9. Verfahren, das durch einen Netzwerkknoten (1400) durchgeführt wird, zum Handhaben einer Prozedur für bedingte Mobilität, wobei das Verfahren Folgendes umfasst:
Empfangen (1000) von Informationen von einer Drahtlosvorrichtung (1300), die aus Messungen in Bezug auf eine Auslösebedingung generiert wird, die auslöst, dass das Handhaben einer Prozedur für bedingte Mobilität durch die Drahtlosvorrichtung durchgeführt wird, wobei die Informationen von der Drahtlosvorrichtung basierend darauf empfangen werden, dass die Drahtlosvorrichtung einen Handover an eine Zielzelle abschließt, und wobei die Informationen mit einer oder mehreren nicht ausgelösten potenziellen Zielzellen in Verbindung stehen, die potenzielle Zielzellen der Prozedur für bedingte Mobilität sind, für die die Auslösebedingung nicht ausgelöst wurde; und Anpassen (1002), basierend auf den Informationen, wie die Drahtlosvorrichtung oder eine zweite Drahtlosvorrichtung mit einer Prozedur für bedingte Mobilität bereitgestellt wird.

10. Verfahren nach Anspruch 9, wobei das Anpassen unter Verwendung der Informationen, die angeben, wie nahe eine Messung in Bezug auf mindestens eine nicht ausgelöste potenzielle Zielzelle am Erfüllen der Auslösebedingung war, durchgeführt wird.

11. Verfahren nach Anspruch 10, wobei das Anpassen unter Verwendung der Informationen, die eine statistische Korrelation zwischen Werten von Messungen angeben, die durch die Auslösebedingung in Bezug auf mindestens zwei potenzielle Zielzellen berücksichtigt wird, durchgeführt wird.

12. Verfahren nach Anspruch 10 oder 11, wobei das Anpassen unter Verwendung der Informationen durchgeführt wird, die einen Vergleich zwischen einem ersten Trend im Zeitverlauf von Werten einer Messung, die von einer ersten Auslösebedingung hinsichtlich einer ersten potenziellen Zielzelle berücksichtigt wird, mit einem zweiten Trend im Zeitverlauf von Werten der Messung, die von der Auslösebedingung hinsichtlich einer zweiten potenziellen Zielzelle berücksichtigt wird, angeben.

13. Verfahren nach Anspruch 9, wobei die Informationen basierend auf Identifizieren eines Werts aus dem Satz von Werten einer Messung generiert werden, die durch die Auslösebedingung berücksichtigt wird, der am weitesten vom Erfüllen der Auslösebedingung entfernt ist.

14. Verfahren nach einem der Ansprüche 9 bis 13, wobei das Anpassen unter Verwendung der Informationen durchgeführt wird, die eine statistische Darstellung von Werten einer Messung, die durch die Auslösebedingung berücksichtigt wird, über eine Überwachungszeit angeben.

15. Netzwerkknoten (1400) für eine Prozedur für bedingte Mobilität, wobei der Netzwerkknoten Folgendes umfasst:
mindestens einen Prozessor (1410); und
mindestens einen Speicher (1420), der an den mindestens einen Prozessor (1410) gekoppelt ist, wobei der mindestens eine Speicher (1420) Programmcode speichert, der bei Ausführung durch den mindestens einen Prozessor (1410) den mindestens einen Prozessor (1410) dazu veranlasst, das Verfahren nach einem der Ansprüche 9 bis 14 durchzuführen.

## Revendications

1. Procédé exécuté par un dispositif sans fil (1300) pour gérer une procédure de mobilité conditionnelle, le procédé comprenant :
la détermination (900) des informations à partir de mesures relatives à une condition de déclenchement qui déclenche la procédure de mobilité conditionnelle à exécuter par le dispositif sans fil, dans lequel les informations concernent une ou plusieurs cellules cibles potentielles non déclenchées, qui sont des cellules cibles potentielles de la procédure de mobilité conditionnelle pour lesquelles la condition de déclenchement n'a pas été déclenchée ; et
la transmission (902) des informations à un noeud de réseau (1400) ;
dans lequel les informations sont transmises au noeud de réseau sur la base de la détermination du fait que le dispositif sans fil a terminé le transfert vers une cellule cible.

2. Procédé selon la revendication 1, dans lequel la condition de déclenchement comprend une première condition de déclenchement, et dans lequel les informations sont générées sur la base de la détermination du degré de proximité à laquelle une mesure relative à au moins une cellule cible potentielle non déclenchée était par rapport à la satisfaction d'une seconde condition de déclenchement pour la cellule cible potentielle non déclenchée.

3. Procédé selon l'une quelconque des revendications 1 ou 2, dans lequel les informations sont générées sur la base de la détermination d'une corrélation statistique entre les valeurs de mesures considérées par des conditions de déclenchement relatives à au moins deux cellules cibles potentielles.

4. Procédé selon la revendication 1, dans lequel les informations sont générées sur la base de la comparaison d'une première tendance dans le temps des valeurs d'une mesure considérée par une première condition de déclenchement concernant une première cellule cible potentielle à une seconde tendance dans le temps des valeurs de la mesure considérée par une seconde condition de déclenchement concernant une seconde cellule cible potentielle.

5. Procédé selon l'une quelconque des revendications 1 à 4, dans lequel les informations sont générées sur la base de l'identification d'une valeur parmi un ensemble de valeurs d'une mesure considérée par la condition de déclenchement, qui est la plus éloignée de la satisfaction de la condition de déclenchement.

6. Procédé selon l'une quelconque des revendications 1 à 5, dans lequel les informations sont générées sur la base de la détermination d'une représentation statistique de valeurs d'une mesure considérée par la condition de déclenchement pendant une durée de surveillance.

7. Procédé selon l'une quelconque des revendications 1 à 6, dans lequel les informations sont transmises au noeud de réseau sur la base de la détermination du fait que la qualité du canal satisfait un seuil défini.

8. Dispositif sans fil (1300) pour gérer une procédure de mobilité conditionnelle, le dispositif sans fil comprenant :
au moins un émetteur-récepteur (1330) ;
au moins un processeur (1310) ; et
au moins une mémoire (1320) couplée à l'au moins un processeur et à l'au moins un émetteur-récepteur, dans lequel l'au moins une mémoire stocke un code de programme qui, lorsqu'il est exécuté par l'au moins un processeur, amène l'au moins un processeur à exécuter le procédé selon l'une quelconque des revendications 1 à 7.

9. Procédé exécuté par un noeud de réseau (1400) pour gérer une procédure de mobilité conditionnelle, le procédé comprenant :
la réception (1000) des informations provenant d'un dispositif sans fil (1300) générées à partir de mesures relatives à une condition de déclenchement qui déclenche la procédure de mobilité conditionnelle à exécuter par le dispositif sans fil, dans lequel les informations sont reçues du dispositif sans fil sur la base de la réalisation du transfert par le dispositif sans fil à une cellule cible et dans lequel les informations concernent une ou plusieurs cellules cibles potentielles non déclenchées, qui sont des cellules cibles potentielles de la procédure de mobilité conditionnelle, pour lesquelles la condition de déclenchement n'a pas été déclenchée ; et
l'adaptation (1002), sur la base des informations, de la manière dont le dispositif sans fil ou un second dispositif sans fil est doté d'une configuration de mobilité conditionnelle.

10. Procédé selon la revendication 9, dans lequel l'adaptation est effectuée en utilisant les informations indiquant à quel degré de proximité une mesure relative à au moins une cellule cible potentielle non déclenchée était par rapport à satisfaction de la condition de déclenchement.

11. Procédé selon la revendication 10, dans lequel l'adaptation est effectuée en utilisant les informations indiquant une corrélation statistique entre les valeurs de mesures considérées par la condition de déclenchement relative à au moins deux cellules cibles potentielles.

12. Procédé selon l'une quelconque des revendications 10 ou 11, dans lequel l'adaptation est effectuée en utilisant les informations indiquant une comparaison d'une première tendance dans le temps des valeurs d'une mesure considérée par la condition de déclenchement concernant une première cellule cible potentielle à une seconde tendance dans le temps des valeurs de la mesure considérée par la condition de déclenchement concernant une seconde cellule cible potentielle.

13. Procédé selon la revendication 9, dans lequel les informations sont générées sur la base de l'identification d'une valeur parmi un ensemble de valeurs d'une mesure considérée par la condition de déclenchement, qui est la plus éloignée de la satisfaction de la condition de déclenchement.

14. Procédé selon l'une quelconque des revendications 9 à 13, dans lequel l'adaptation est effectuée en utilisant les informations indiquant une représentation statistique des valeurs d'une mesure considérée par la condition de déclenchement pendant une durée de surveillance.

15. Noeud de réseau (1400) pour une procédure de mobilité conditionnelle, le noeud de réseau comprenant :
au moins un processeur (1410) ; et
au moins une mémoire (1420) couplée à l'au moins un processeur (1410), dans lequel l'au moins une mémoire (1420) stocke un code de programme qui, lorsqu'il est exécuté par l'au moins un processeur (1410), amène l'au moins un processeur (1410) à exécuter le procédé selon l'une quelconque des revendications 9 à 14.
